# EUROPEAN PATENT APPLICATION

(11) **EP 1 475 405 A1**
(43) Date of publication of application: **10.11.2004**
(21) Application number: 04009927.7
(22) Date of filing: 27.04.2004
(51) Int. Cl.: C08K 3/34, C08L 13/00, C08L 15/00

(54) **Rubber compound comprising nitrile rubbers**

(30) Priority: 08.05.2003 CA 2428222
(71) Applicant: Bayer Inc., Sarnia, ON N7T 7M2 (CA)
(72) Inventor: Pazur, Richard, Ontario, N7S 3E5 (CA)
(74) Representative: Bailly, Peter, Dr.

(57) **Abstract**

The present invention relates to a rubber compound comprising at least one hydrogenated carboxylated nitrile rubber, at least one hydrogenated nitrile rubber and at least one nanoclay, a vulcanizable rubber compound comprising said rubber compound and at least one vulcanization agent and a shaped article comprising said rubber compound and a process for preparing said a vulcanizable rubber compound.

## Description

### Field of the Invention.

The present invention relates to a rubber compound comprising at least one hydrogenated carboxylated nitrile rubber, at least one hydrogenated nitrile rubber and at least one nanoclay, a curable rubber compound comprising said rubber compound and at least one vulcanization agent and a shaped article comprising said rubber compound.

### Field of the Invention.

The present invention relates to a rubber compound comprising at least one hydrogenated carboxylated nitrile rubber, at least one hydrogenated nitrile rubber and at least one nanoclay, a curable rubber compound comprising said rubber compound and at least one vulcanization agent, a shaped article comprising said rubber compound, a process for preparing said rubber compound wherein at least one hydrogenated carboxylated nitrile rubber, at least one hydrogenated nitrile rubber and at least one nanoclay are mixed together.

### Background of the Invention

Hydrogenated nitrile rubber (HNBR), prepared by the selective hydrogenation of nitrile rubber (NBR, a co-polymer comprising repeating units derived from at least one conjugated diene, at least one unsaturated nitrile and optionally further comonomers), and hydrogenated carboxylated nitrile rubber (HXNBR), prepared by the selective hydrogenation of carboxylated nitrile rubber (XNBR, a, preferably statistical, ter-polymer comprising repeating units derived from at least one conjugated diene, at least one unsaturated nitrile, at least one conjugated diene having a carboxylic group (e.g an aipha-beta-unsaturated carboxylic acid) and optionally further comonomers are specialty rubbers which have very good heat resistance, excellent ozone and chemical resistance, and excellent oil resistance. Coupled with the high level of mechanical properties of the rubber (in particular the high resistance to abrasion) it is not surprising that HXNBR and HNBR have found widespread use in the automotive (seals, hoses, bearing pads) oil (stators, well head seals, valve plates), electrical (cable sheathing), mechanical engineering (wheels, rollers) and shipbuilding (pipe seals, couplings) industries, amongst others.

Commercially available HNBR has a Mooney viscosity in the range of from 55 to 105, a molecular weight in the range of from 200,000 to 500,000 g/mol, a polydispersity greater than 3.0 and a residual double bond (RDB) content in the range of from 0.1 to 18% (by IR spectroscopy).

HXNBR and a method for producing it is for example known from WO-01/77185-A1 which is hereby incorporated by reference with regard to jurisdictions allowing for this procedure.

While being perfectly suited for most automotive applications, the permeation resistance against fuel and air as well as the mill shrinkage and scorch safety of compounds comprising HNBR and HXNBR remains an area for improvement.

Nanoclays are processed nanometer-scale clays having nanometer-thick platelets that can be modified to make the clay complexes compatible with organic monomers and polymers. Typically nanoclays are processed natural smectite clays, such as sodium or calcium montmorillonite, which have been the first choice for producing nanoclays, due to their availability, easy extraction, and relatively low cost. The heterogeneity of natural clay can be a problem, however. This can be overcome by using synthetic clays such as hydrotalcite and laponite. They may or may not be organically treated to provide "gallery spacing" and to promote compatibility with the resin of choice. Most treatments include onium ion substitution reactions and/or the dipole moment modification.

Nanoclays are expanding clays. The structure and chemical makeup of expanding clays means that individual platelets will separate from each other to interact with some swelling agent, typically water.

Cloisite® nanoclays are produced by Southern Clay Products, Inc., of Texas, USA. They are high aspect ratio additives based on montmorillonite clay.

### Summary of the Invention

In one of it's aspects, the present invention relates to a rubber compound comprising at least one hydrogenated, preferably statistical, carboxylated nitrile rubber, at least one hydrogenated nitrile rubber and at least one nanoclay.

It is preferred that the nanoclay is based on a smectite clay, in particular a montmorillonite clay, even more preferred are Cloisite® nanoclays.

In still another one of it's aspects, the present invention relates to a vulcanizable rubber compound comprising at least one hydrogenated, preferably statistical, carboxylated nitrile rubber, at least one hydrogenated nitrile rubber, at least one nanoclay, at least one vulcanization agent, and optionally further filler(s).

In still another one of it's aspects, the present invention relates to a shaped article comprising said rubber compound comprising at least one hydrogenated, preferably statistical, carboxylated nitrile rubber, at least one hydrogenated nitrile rubber, at least one nanoclay and optionally further filler(s).

In still another one of it's aspects, the present invention relates to a process for preparing said rubber compound comprising at least one hydrogenated, preferably statistical, carboxylated nitrile rubber, at least one hydrogenated nitrile rubber and at least one nanoclay, wherein at least one hydrogenated, preferably statistical, carboxylated nitrile rubber, at least one hydrogenated nitrile rubber and at least one nanoclay are mixed together.

### Brief Description of the Drawings

Figure 1 shows the permeability to air at 65.5 °C and 50 psig of the different compounds exemplified in the Examples section.
Figure 2 shows the permeability to carbon dioxide at 65.5 °C and 50 psig of the different compounds exemplified in the Examples section.
Figure 3 shows the permeability resistance to fuel C measured by cumulative weight loss in grams after 1 week of aging at 23°C.
Figure 4 shows the permeability resistance to fuel CE10 (90% fuel C + 10% ethanol) measured by cumulative weight loss in grams after 1 week of aging at 23°C.
Figure 5 illustrates the compound Mooney scorch characteristics of the eight compounds.
Figure 6 shows the amount of compound shrinkage for 70 grams of material that has been milled with cooling at 50°C.

### Description of the Invention

As used throughout this specification, the term "nitrile rubber" or NBR is intended to have a broad meaning and is meant to encompass a copolymer having repeating units derived from at least one conjugated diene, at least one alpha, beta-unsaturated nitrile and optionally further one or more copolymerizable monomers.

As used throughout this specification, the term "carboxylated nitrile rubber" or XNBR is intended to have a broad meaning and is meant to encompass a copolymer having repeating units derived from at least one conjugated diene, at least one alpha,beta-unsaturated nitrile, at least one alpha-beta-unsaturated carboxylic acid or alpha-beta-unsaturated carboxylic acid derivative and optionally further one or more copolymerizable monomers.

As used throughout this specification, the term "hydrogenated" or HNBR/HXNBR is intended to have a broad meaning and is meant to encompass a NBR or XNBR wherein at least 10 % of the residual C-C double bonds (RDB) present in the starting NBR or XNBR are hydrogenated, preferably more than 50 % of the RDB present are hydrogenated, more preferably more than 90 % of the RDB are hydrogenated, even more preferably more than 95 % of the RDB are hydrogenated and most preferably more than 99 % of the RDB are hydrogenated.

The conjugated diene may be any known conjugated diene in particular a C₄-C₆ conjugated diene. Preferred conjugated dienes are butadiene, isoprene, piperylene, 2,3-dimethyl butadiene and mixtures thereof. Even more preferred C₄-C₆ conjugated dienes are butadiene, isoprene and mixtures thereof. The most preferred C₄-C₆ conjugated diene is butadiene.

The alpha,beta-unsaturated nitrile may be any known alpha,beta-unsaturated nitrile, in particular a C₃-C₅ alpha,beta-unsaturated nitrile. Preferred C₃-C₅ alpha,beta-unsaturated nitriles are acrylonitrile, methacrylonitrile, ethacrylonitrile and mixtures thereof. The most preferred C₃-C₅ alpha,beta-unsaturated nitrile is acrylonitrile.

Preferably, the HNBR comprises in the range of from 40 to 85 weight percent of repeating units derived from one or more conjugated dienes and in the range of from 15 to 60 weight percent of repeating units derived from one or more unsaturated nitriles. More preferably, the HNBR comprises in the range of from 60 to 75 weight percent of repeating units derived from one or more conjugated dienes and in the range of from 25 to 40 weight percent of repeating units derived from one or more unsaturated nitriles. Most preferably, the HNBR comprises in the range of from 60 to 70 weight percent of repeating units derived from one or more conjugated dienes and in the range of from 30 to 40 weight percent of repeating units derived from one or more unsaturated nitriles.

The alpha,beta-unsaturated carboxylic acid may be any known alpha,beta-unsaturated acid copolymerizable with the diene(s) and the nitile(s), in particular acrylic, methacrylic, ethacrylic, crotonic, maleic, fumaric or itaconic acid, of which acrylic and methacrylic are preferred.

The alpha,beta-unsaturated carboxylic acid derivative may be any known alpha,beta-unsaturated acid derivative copolymerizable with the diene(s) and the nitile(s), in particular esters, amides and anhydrides, preferably esters and anhydrides of acrylic, methacrylic, ethacrylic, crotonic, maleic, fumaric or itaconic acid.

Preferably, the HXNBR comprises in the range of from 39.1 to 80 weight percent of repeating units derived from one or more conjugated dienes, in the range of from 5 to 60 weight percent of repeating units derived from one more unsaturated nitriles and 0.1 to 15 percent of repeating units derived from one or more unsaturated carboxylic acid or acid derivative. More preferably, the HXNBR comprises in the range of from 60 to 70 weight percent of repeating units derived from one or more conjugated dienes, in the range of from 20 to 39.5 weight percent of repeating units derived from one or more unsaturated nitriles and 0.5 to 10 percent of repeating units derived from one or more unsaturated carboxylic acid or acid derivative. Most preferably, the HXNBR comprises in the range of from 56 to 69.5 weight percent of repeating units derived from one or more conjugated dienes, in the range of from 30 to 37 weight percent of repeating units derived from one or more unsaturated nitriles and 0.5 to 7 percent of repeating units derived from one or more unsaturated carboxylic acid or acid derivative. Preferably said HXNBR is a statistical copolymer with in particular the carboxylic functions randomly distributed throughout the polymer chains.

Optionally, the HNBR and/or HXNBR may further comprise repeating units derived from one or more copolymerizable monomers. Repeating units derived from one or more copolymerizable monomers will replace either the nitrile or the diene portion of the nitrile rubber and it will be apparent to the skilled in the art that the above mentioned figures will have to be adjusted to result in 100 weight percent.

The Mooney viscosity of the rubber was determined using ASTM test D1646.

The composition of the inventive rubber compound may vary in wide ranges and in fact it is possible to tailor the properties of the resulting compound by varying the ratio HXNBR(s)/HNBR(s).

The present invention is not limited to a special nanoclay. Thus, any nanoclay known by the skilled in the art should be suitable. However, natural powdered, optionally modified with organic modifiers, smectite clays, such as sodium or calcium montmorillonite, or synthetic clays such as hydrotalcite and laponite are preferred. Powdered montmorillonite clays that have been modified with organic modifiers are even more preferred such as montmorillonite clays modified with halogen salts of (CH₃)₂N⁺(HT)₂, where HT is hydrogenated Tallow (∼65% C₁₈; ∼30% C₁₆; ∼5% C₁₄) or (CH₃)₂N⁺(CH₂-C₆H₅)(HT), where HT is hydrogenated Tallow (∼65% C₁₈; ∼30% C₁₆; ∼5% C₁₄). These preferred clays are available as Cloisite® clays 10A, 20A, 6A, 15A, 30B, 25A.

The inventive compound comprises in the range of from 0.1 to 30 phr (per hundred parts of rubber) of nanoclay(s), preferably from 1-15 phr, more preferably from 2-8 phr of nanoclay(s).

The HXNBR(s) and HNBR(s) comprised in the inventive compound are not restricted. However, preferably they have a Mooney viscosity (ML 1+4 @ 100°C) above 30. Blending of two or more nitrile rubber polymers having a different Mooney viscosity will usually result in a blend having a bi-modal or multi-modal molecular weight distribution. According to the present invention, the final blend has preferably at least a bi-modal molecular weight distribution.

In order to provide a vulcanizable rubber compound, at least one vulcanizing agent or curing system has to be added. The invention is not limited to a special curing system, however, peroxide curing system(s) are preferred. Furthermore, the invention is not limited to a special peroxide curing system. For example, inorganic or organic peroxides are suitable. Preferred are organic peroxides such as dialkylperoxides, ketalperoxides, aralkylperoxides, peroxide ethers, peroxide esters, such as di-tert.-butylperoxide, bis-(tert.-butylperoxyisopropyl)-benzene, dicumylperoxide, 2,5-dimethyl-2,5-di(tert.-butylperoxy)-hexane, 2,5-dimethyl-2,5-di(tert.-butylperoxy)-hexene-(3), 1,1-bis-(tert.-butylperoxy)-3,3,5-trimethyl-cyclohexane, benzoylperoxide, tert.-butylcumylperoxide and tert.-butylperbenzoate. Usually the amount of peroxide in the vulcanizable rubber compound is in the range of from 1 to 10 phr, preferably from 4 to 8 phr. Subsequent curing is usually performed at a temperature in the range of from 100 to 200 °C, preferably 130 to 180 °C. Peroxides might be applied advantageously in a polymer-bound form. Suitable systems are commercially available, such as Polydispersion T(VC) D-40 P from Rhein Chemie Rheinau GmbH, D (= polymerbound di-tert.-butylperoxy-isopropylbenzene).

The vulcanizable rubber compound may further comprise fillers. The filler may be an active or an inactive filler or a mixture thereof. The filler may be in particular:
- highly dispersed silicas, prepared e.g. by the precipitation of silicate solutions or the flame hydrolysis of silicon halides, with specific surface areas of in the range of from 5 to 1000 m²/g, and with primary particle sizes of in the range of from 10 to 400 nm; the silicas can optionally also be present as mixed oxides with other metal oxides such as those of Al, Mg, Ca, Ba, Zn, Zr and Ti;
- synthetic silicates, such as aluminum silicate and alkaline earth metal silicate like magnesium silicate or calcium silicate, with BET specific surface areas in the range of from 20 to 400 m²/g and primary particle diameters in the range of from 10 to 400 nm;
- natural silicates, such as kaolin and other naturally occurring silica;
- glass fibers and glass fiber products (matting, extrudates) or glass microspheres;
- metal oxides, such as zinc oxide, calcium oxide, magnesium oxide and aluminum oxide;
- metal carbonates, such as magnesium carbonate, calcium carbonate and zinc carbonate;
- metal hydroxides, e.g. aluminum hydroxide and magnesium hydroxide;
- carbon blacks; the carbon blacks to be used here are prepared by the lamp black, furnace black or gas black process and have preferably BET (DIN 66 131) specific surface areas in the range of from 20 to 200 m²/g, e.g. SAF, ISAF, HAF, FEF or GPF carbon blacks;
- rubber gels, especially those based on polybutadiene, butadiene/styrene copolymers, butadiene/acrylonitrile copolymers and polychloroprene;
or mixtures thereof.

Examples of preferred mineral fillers include silica, silicates, clay such as bentonite, gypsum, alumina, titanium dioxide, talc, mixtures of these, and the like. These mineral particles have hydroxyl groups on their surface, rendering them hydrophilic and oleophobic. This exacerbates the difficulty of achieving good interaction between the filler particles and the rubber. For many purposes, the preferred mineral is silica, especially silica made by carbon dioxide precipitation of sodium silicate. Dried amorphous silica particles suitable for use in accordance with the invention may have a mean agglomerate particle size in the range of from 1 to 100 microns, preferably between 10 and 50 microns and most preferably between 10 and 25 microns. It is preferred that less than 10 percent by volume of the agglomerate particles are below 5 microns or over 50 microns in size. A suitable amorphous dried silica moreover usually has a BET surface area, measured in accordance with DIN (Deutsche Industrie Norm) 66131, of in the range of from 50 and 450 square meters per gram and a DBP absorption, as measured in accordance with DIN 53601, of in the range of from 150 and 400 grams per 100 grams of silica, and a drying loss, as measured according to DIN ISO 787/11, of in the range of from 0 to 10 percent by weight. Suitable silica fillers are available under the trademarks HiSil® 210, HiSil® 233 and HiSil® 243 from PPG Industries Inc. Also suitable are Vulkasil® S and Vulkasil® N, from Bayer AG.

Often, use of carbon black as a filler is advantageous. Usually, carbon black is present in the polymer blend in an amount of in the range of from 20 to 200 parts by weight, preferably 30 to 150 parts by weight, more preferably 40 to 100 parts by weight. Further, it might be advantageous to use a combination of carbon black and mineral filler in the inventive vulcanizable rubber compound. In this combination the ratio of mineral fillers to carbon black is usually in the range of from 0.05 to 20, preferably 0.1 to 10.

The vulcanizable rubber compound may further comprise other natural or synthetic rubbers such as BR (polybutadiene), ABR (butadiene/acrylic acid-C₁-C₄-alkylester-copolymers), EVM (ethylene vinyl acetate-copolymers), AEM (ethylene acrylate-copolymers), CR (polychloroprene), IR (polyisoprene), SBR (styrene/butadiene-copolymers) with styrene contents in the range of 1 to 60 wt%, EPDM (ethylene/propylene/diene-copolymers), FKM (fluoropolymers or fluororubbers), and mixtures of the given polymers. Careful blending with said rubbers often reduces cost of the polymer blend without sacrificing the processability. The amount of natural and/or synthetic rubbers will depend on the process condition to be applied during manufacture of shaped articles and is readily available by few preliminary experiments.

The vulcanizable rubber compound according to the invention can contain further auxiliary products for rubbers, such as reaction accelerators, vulcanizing accelerators, vulcanizing acceleration auxiliaries, antioxidants, foaming agents, anti-aging agents, heat stabilizers, light stabilizers, ozone stabilizers, processing aids, plasticizers, tackifiers, blowing agents, dyestuffs, pigments, waxes, extenders, organic acids, inhibitors, metal oxides, and activators such as triethanolamine, polyethylene glycol, hexanetriol, etc., which are known to the rubber industry. The rubber aids are used in conventional amounts, which depend inter alia on the intended use. Conventional amounts are e.g. from 0.1 to 50 phr. Preferably the vulcanizable compound comprising said solution blend further comprises in the range of 0.1 to 20 phr of one or more organic fatty acids as an auxiliary product, preferably a unsaturated fatty acid having one, two or more carbon double bonds in the molecule which more preferably includes 10% by weight or more of a conjugated diene acid having at least one conjugated carbon-carbon double bond in its molecule. Preferably those fatty acids have in the range of from 8-22 carbon atoms, more preferably 12-18. Examples include stearic acid, palmitic acid and oleic acid and their calcium-, zinc-, magnesium-, potassium- and ammonium salts.

The ingredients of the final vulcanizable rubber compound comprising said rubber compound are often mixed together, suitably at an elevated temperature that may range from 25 °C to 200 °C. Normally the mixing time does not exceed one hour and a time in the range from 2 to 30 minutes is usually adequate. Mixing is suitably carried out in an internal mixer such as a Banbury mixer, or a Haake or Brabender miniature internal mixer. A two roll mill mixer also provides a good dispersion of the additives within the elastomer. An extruder also provides good mixing, and permits shorter mixing times. It is possible to carry out the mixing in two or more stages, and the mixing can be done in different apparatus, for example one stage in an internal mixer and one stage in an extruder. However, it should be taken care that no unwanted precrosslinking (= scorch) occurs during the mixing stage. For compounding and vulcanization see also: Encyclopedia of Polymer Science and Engineering, Vol. 4, p. 66 et seq. (Compounding) and Vol. 17, p. 666 et seq. (Vulcanization).

Due to the increased permeation resistance, the lower mill shrinkage and increased scorch safety, the vulcanizable rubber compound is very well suited for the manufacture of a shaped article, such as a seal, hose, bearing pad, stator, well head seal, valve plate, cable sheathing, wheel roller, pipe seal, in place gaskets or footwear component. Furthermore, the inventive vulcanizable rubber compound is very well suited for automotive parts used in meeting the requirements of lower emission vehicles given the improved permeation resistance to fuels.

### EXAMPLES

### Description of tests:

### Cure rheometry:

Vulcanization was followed on a Moving Die Rheometer (MDR 2000(E)) using a frequency of oscillation of 1.7 Hz and a 1 °arc at 180°C for 30 minutes total run time. The test procedure follows ASTM D-5289.

### Compound Mooney Viscosity and Scorch.

A large rotor was used for these tests and ASTM method D-1646 was followed. The compound Mooney viscosity was determined at 100°C by preheating the sample 1 minute and then, measuring the torque (Mooney viscosity units) after 4 minutes of shearing action caused by the viscometer disk rotating at 2 r.p.m.. Mooney scorch measurements taken as the time from the lowest torque value to a rise of 5 Mooney units (t05) were carried out at 125ºC.

### Stress-strain.

Samples were prepared by curing a macro sheet at 180°C for 12 minutes, after which the appropriate sample was died out into standard ASTM die C dumbells. The test was conducted at 23ºC.

### Hot air aging/stress-strain:

Vulcanized dumbell die C samples were aged for 168 hrs in a hot air oven at 150°C and then tested at 23°C. This test complies with ASTM D-573.

### Hardness:

All hardness measurements were carried out with an A-2 type durometer.

### Mill Shrinkage.

This test complies with ASTM D-917, Method B. The test is performed at 50°C (roll temperature) for 70g of rubber sample.

### Haake Extrusion with Garvey die: ¾" diameter screw and 10" screw length.

The barrel temperature was set at 100°C while the Garvey die was at 105°C. The single screw was turning at 45 r.p.m.. Testing was carried out according to ASTM D-2230.

### Description of Ingredients and General Mixing Procedure:

Cloisite® 20A, 6A - Montmorillonite, organically modified - products of Southern Clays
Cloisite® NA+ - Montmorillonite, not organically modified - a product of Southern Clays
Therban® A 3406 (HNBR available from Bayer Inc.)
Therban® XT VP KA 8889 (hydrogenated carboxylated nitrile (HXNBR) rubber commercially available from Bayer Inc.)
Aktiplast® PP- zinc salts of high molecular weight fatty acids available from Rhein Chemie Corp. USA.
Maglite® D - magnesium oxide from The C.P. Hall Co., Inc.
Naugard® 445 - p-dicumyl diphenylamine by Uniroyal Chemicals.
Plasthall® TOTM - trioctyl trimellitate by The C.P. Hall Co., Inc.
Carbon Black, N 762 - carbon black by Cabot Corp.
Vulkanox ZMB-2/C5 - zinc-4- and -5-methyl-2-mercapto-benzimidazole (ZMMBI) by Bayer AG
Ricon® 153-D - 1-2 polybutadiene (65% on calcium silicate) by Sartomer Co.
Kadox® 920- zinc oxide by St. Lawrence Chem. Inc.
Vulcup® 40 KE -bis 2-(t-butyl-peroxy) diisopropylbenzene (40% on Burgess Clay by Geo Specialty Chemicals Inc.

The rubbers and the nanoclay were mixed in a 1.57 liter Banbury internal tangential mixture with the Mokon set to 30 °C and a rotor speed of 55 RPM for 2 minutes. The carbon black, Aktiplast PP, Maglite D, Naugard 445, Plasthall TOTM, Vulkanox ZMB-2/C5 and Kadox 920 were then added to the compound and the compound was mixed for another 3 minutes. To the cooled sample, the Ricon 153-D and Vulcup 40KE was added on a 10" x 20" mill with the Mokon set to 30 °C. Several three quarter cuts were performed to homogenize the curatives into the masterbatch followed by six end-wise passes of the compound.

### Example 1

Eight batches were prepared according to Table 1. Examples 1a, 1b, 1c, 1e, and 1g are comparative examples.

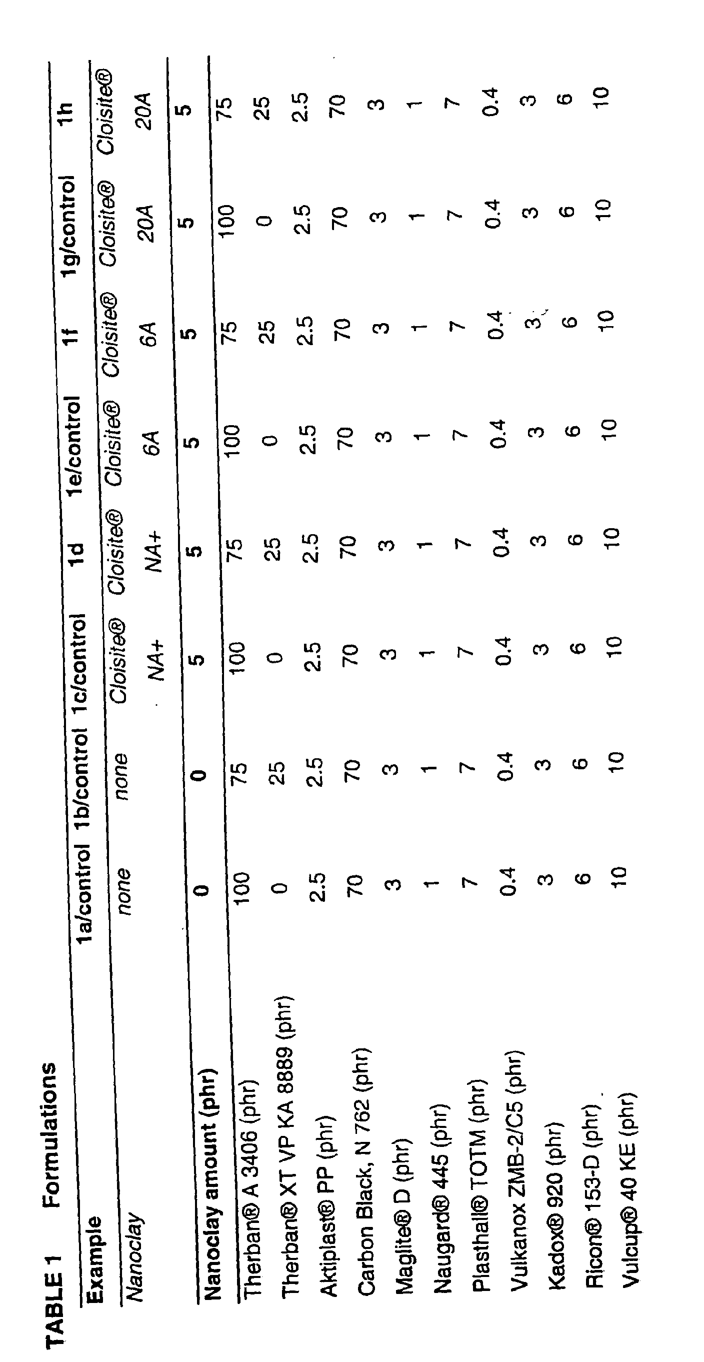

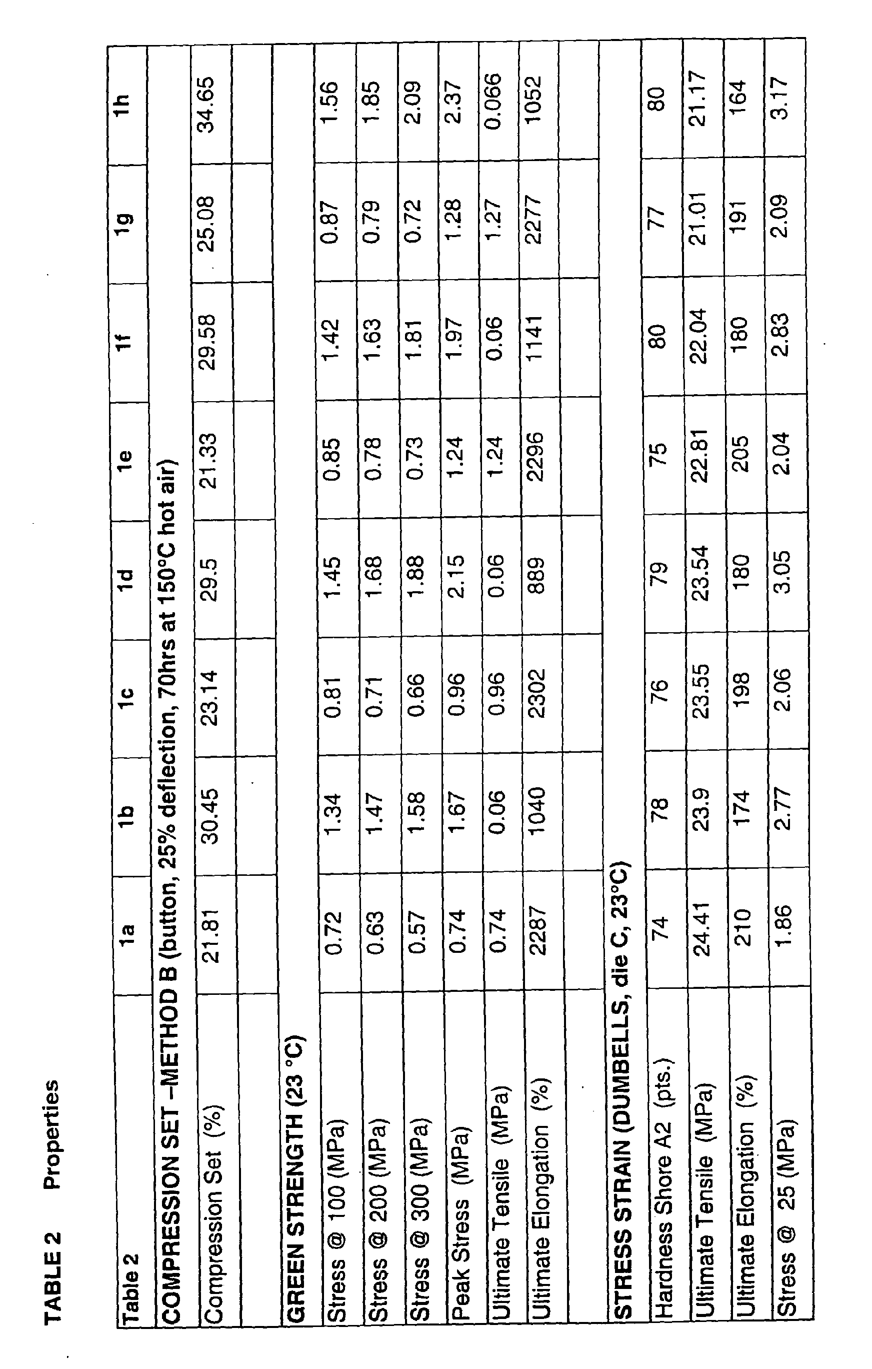

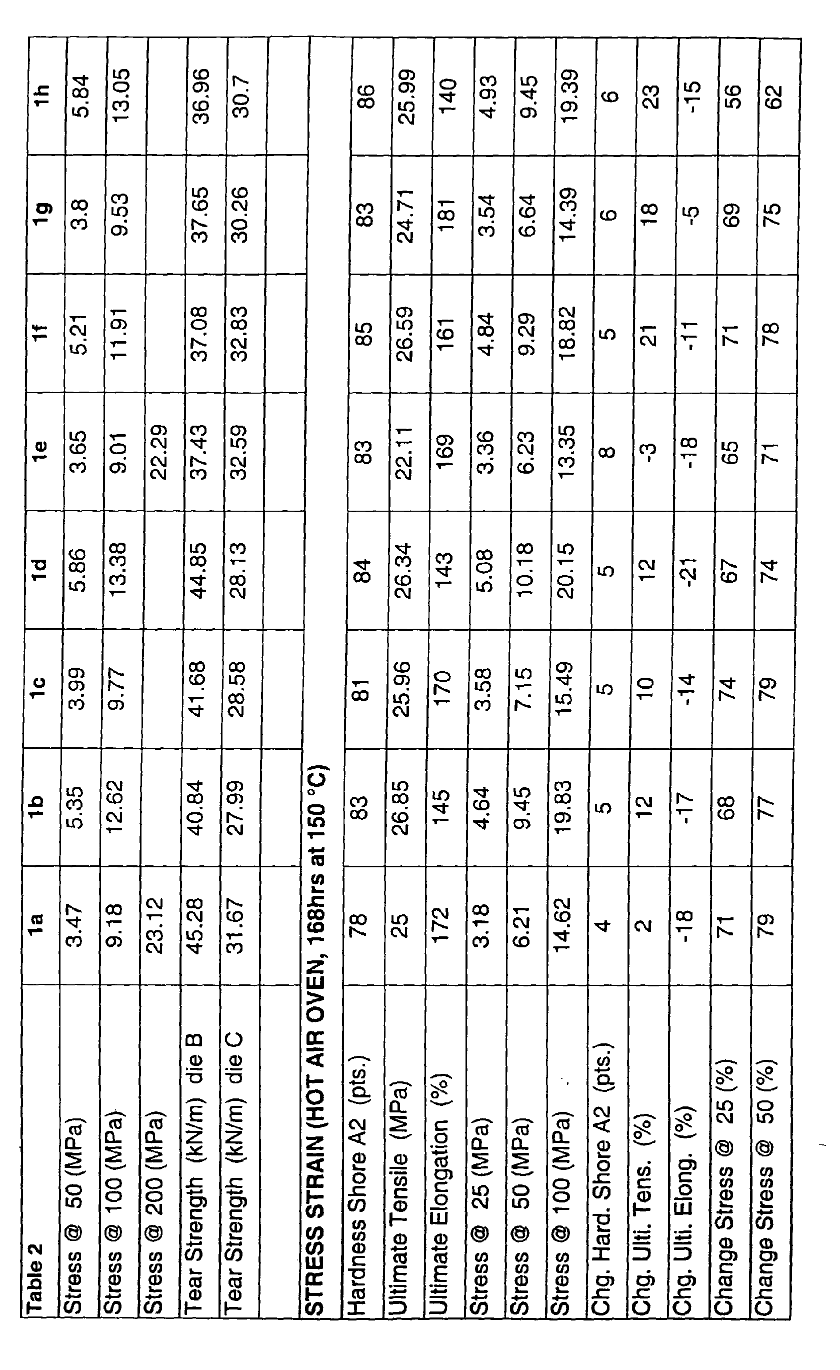

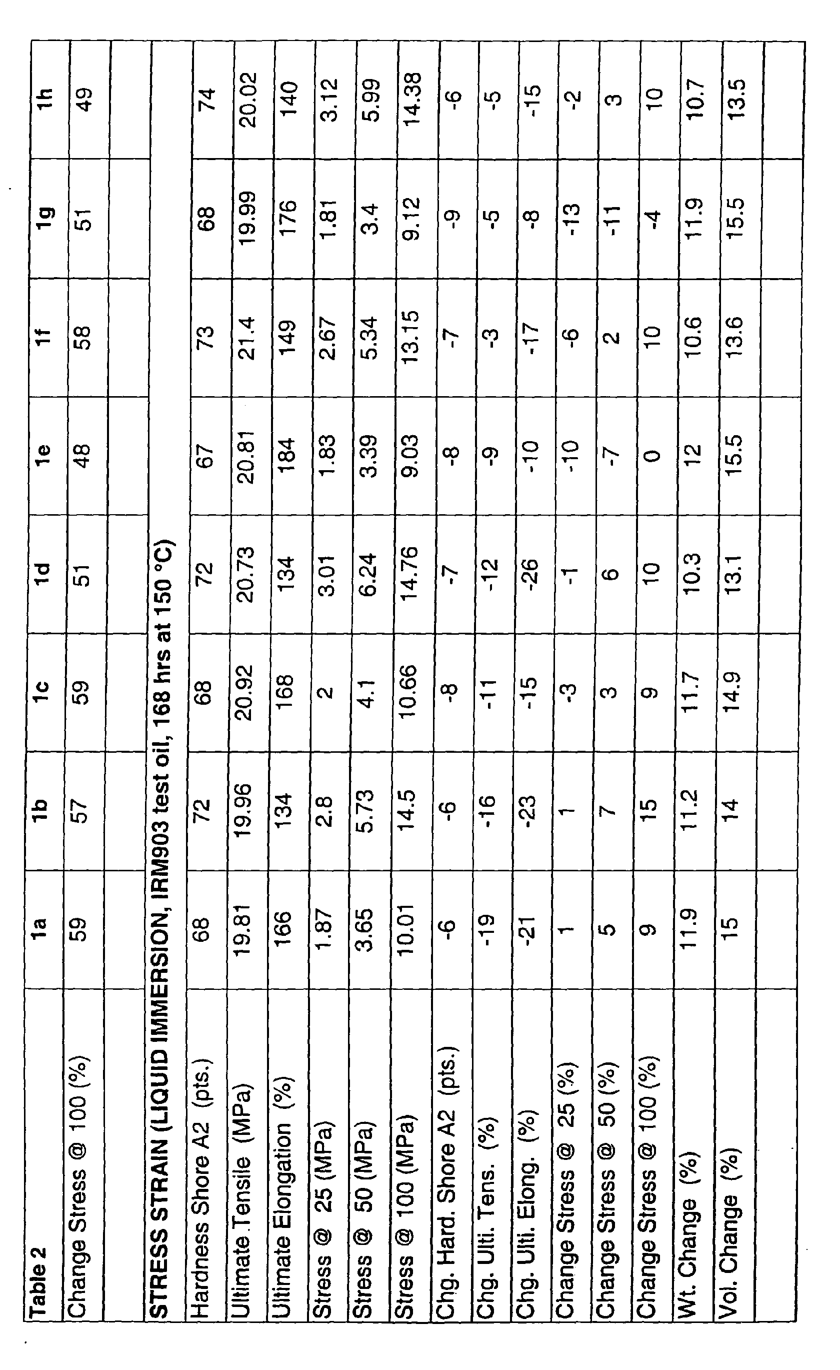

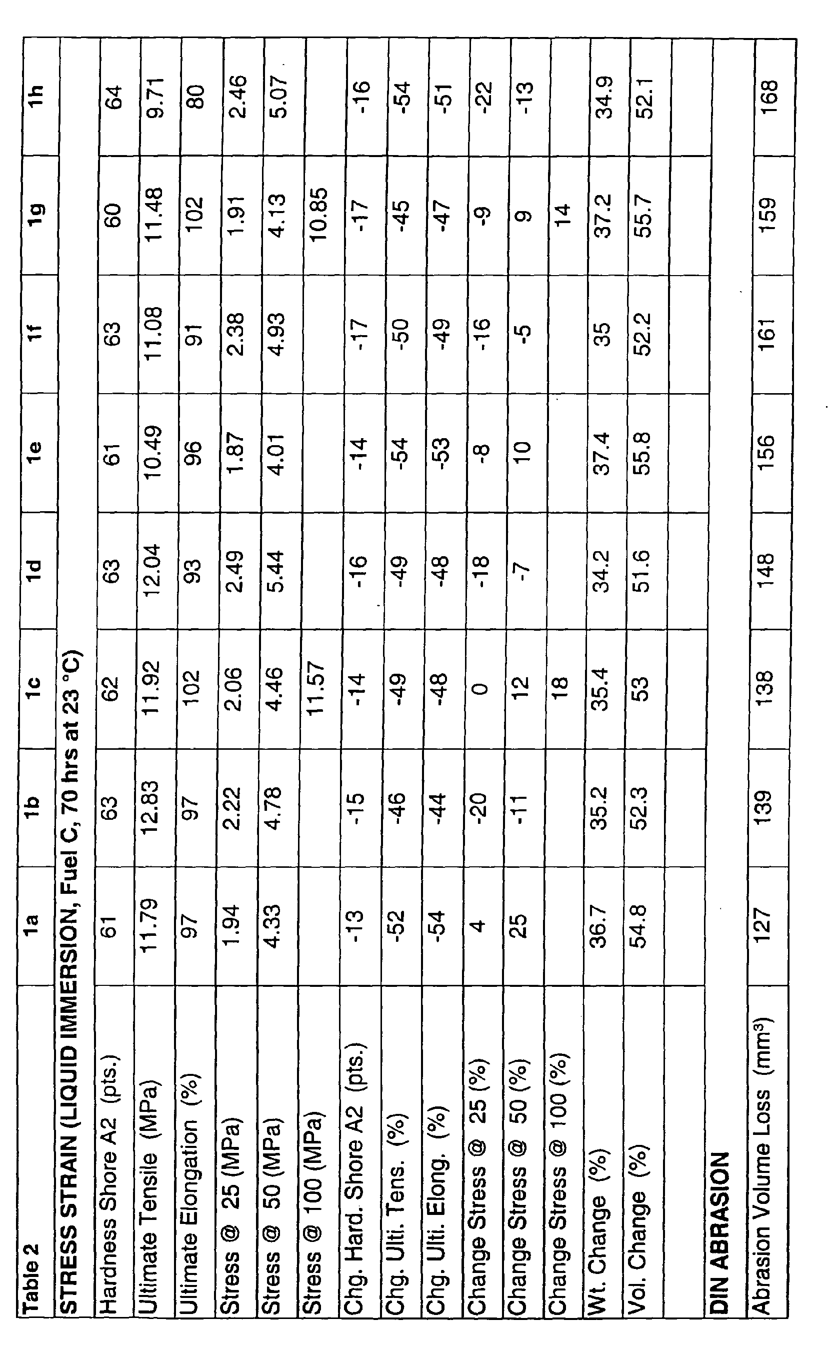

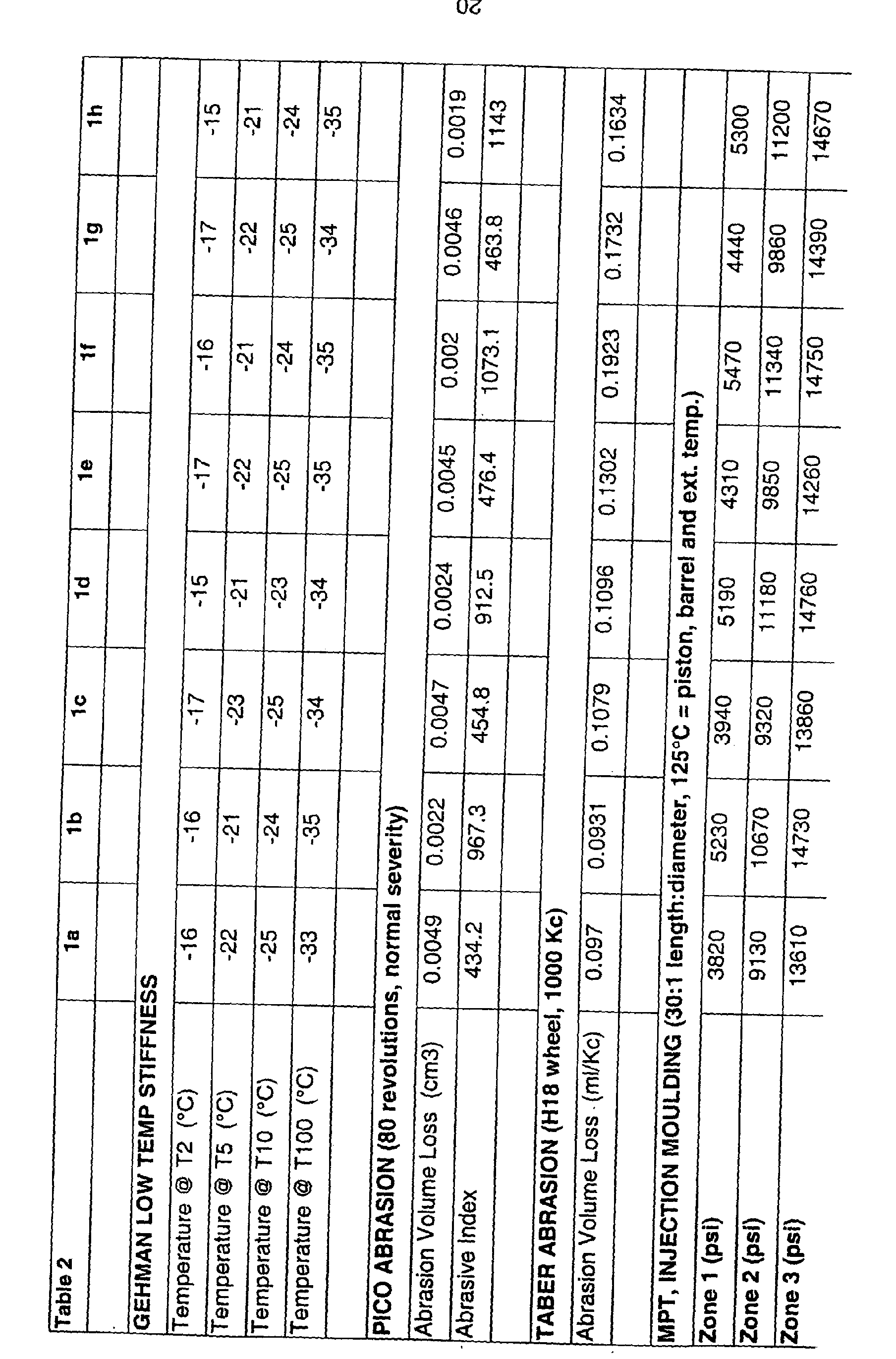

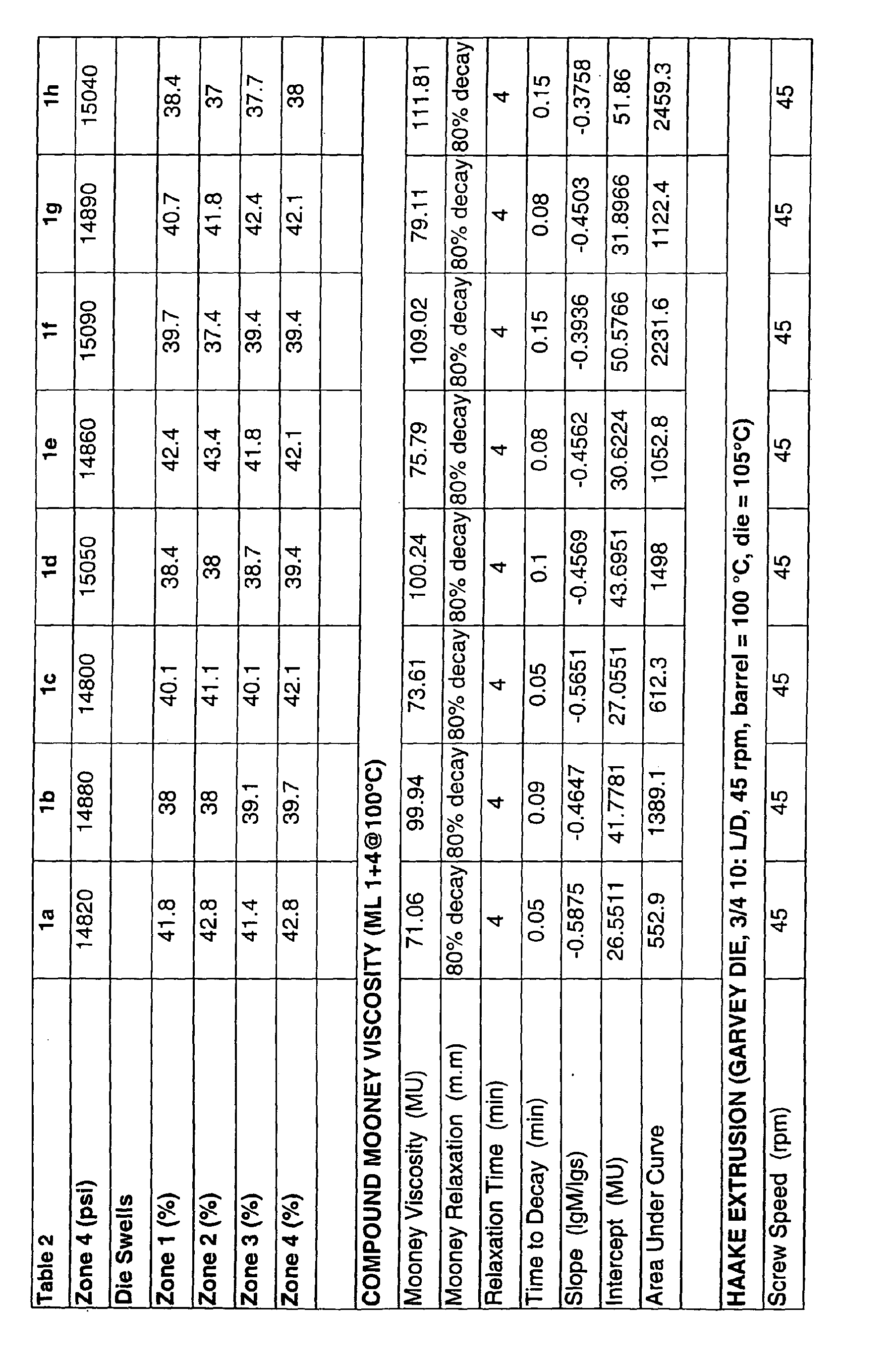

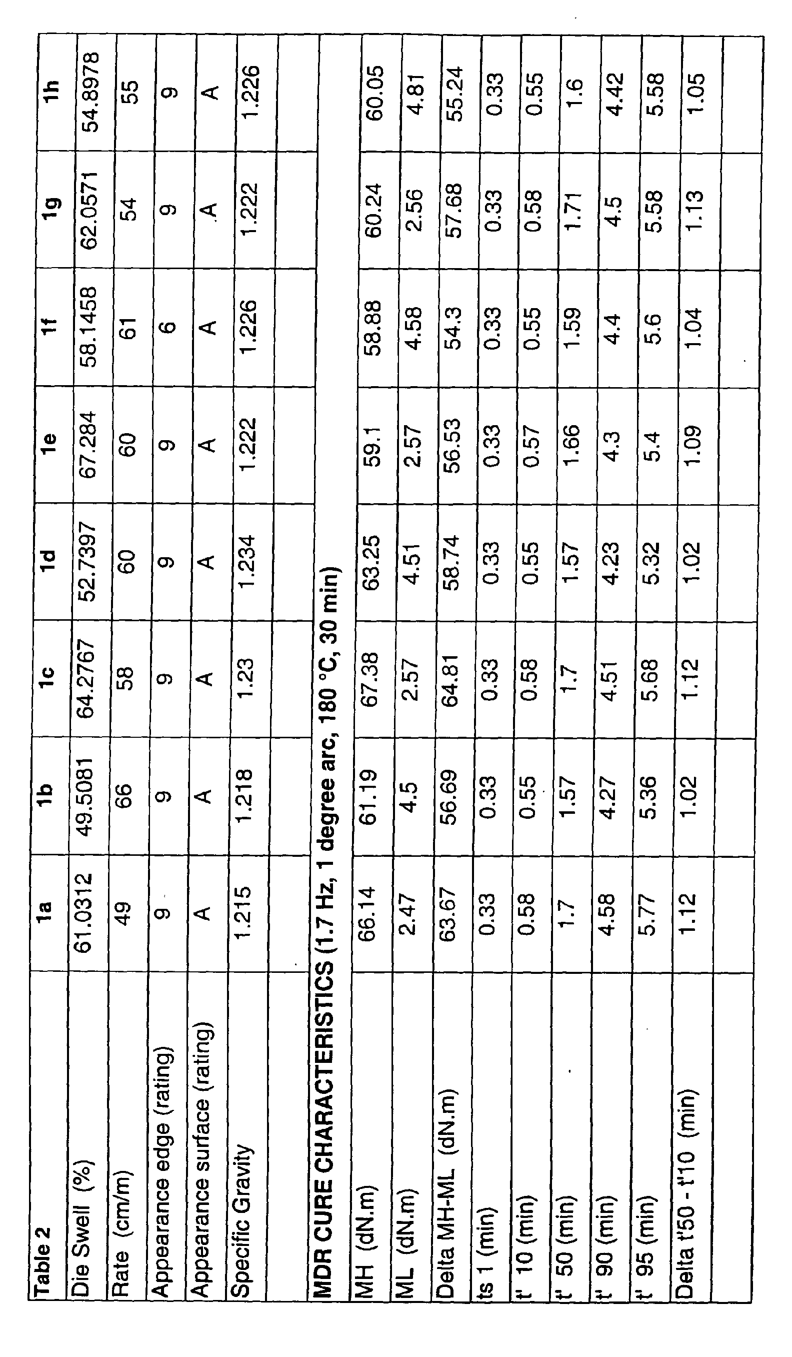

Table 2 shows the compound curing, physical and aging properties of the eight examples 1a through 1h. 25 phr of HXNBR addition to HNBR (example 1a) causes an increase in compression set values during hot air aging. It is believed to be due to the loss of labile crosslinking provided by the ionic groups binding adjacent HXNBR polymers chains together. The increase in compression set is expected, however is not deleterious to the properties of the final part. 5 phr nanoclay addition (1c, 1e and 1g) has little effect on the compression set. The main effect of increased compression set in the nanoclay examples 1d, 1f and 1h compared to 1a is coming from the HXNBR component of the blends.

It can be seen that green strength can be improved by addition of HXNBR in the compound (example 1b). Nanoclay addition alone has a effect as well in improving compound green strength as seen in examples 1c, 1e and 1g compared to 1a. Favourable interactions between the clay surface the polymer chains provides extra reinforcement to the overall polymer matrix. Retention of part dimensionality is an advantageous criterium to those skilled in the art of rubber compounding. The added green strength advantages of HXNBR and the nanoclay together can be seen readily in examples 1d, 1f and 1h.

HXNBRaddition to HNBR causes well known changes in the physical properties: increased hardness and moduli (example 1b compared to 1a). It can be seen that 5 phr nanoclay addition provides extra reinforcement in compounds 1c, 1e and 1g. Compounds 1d, 1f and 1h display cumulative characteristics with respect to hardness, modulus and elongation effects of HXNBRand nanoclay addition. Die C tear strength values are similar for all eight compounds whereas die B tear strength seems to decrease in compounds containing the Cloisites 6A and 20A (examples 1e to 1h) regardless of HXNBR addition.

For all intents and purposes, hot air aging and subsequent testing in stress strain shows minor differences between the eight compounds. The same is true of the stress strain testing in IRM 903 oil where all eight examples exhibit similar aging properties. Nanoclay addition alone however (see examples 1c, 1e and 1g) does seem to help in the retention of ultimate tensile and elongation upon aging in oil. The HNBR/HXNBR/ nanoclay combination (examples 1d, 1f and 1h) improves to a certain extent the weight and volume changes respectively. The addition of HXNBR to HNBR(compare 1b to 1a) does improve the resistance to fuels by providing better retention of tensile and elongation as well as lesser weight and volume swells. The combination of HNBR/HXNBR and the nanoclays does not provide in immersion fuel testing added benefits.

The low temperature properties of all eight examples are the same according to the Gehman low temperature stiffness testing. Din and Taber abrasion testing shows good abrasion resistance of all eight compounds. A loss in abrasion resistance is observed in going to the Cloisite 6A and 20A grades (examples 1e through 1h). HXNBR addition to HNBR causes a huge increase in the Pico abrasion resistance and is a phenomenon well known. This effect is not harmed by nanoclay addition to HNBR/HXNBRcompounds irrespective of the Cloisite type (examples 1d, 1f and 1h). In fact , the HNBR/HXNBR/nanoclay combination enhances Pico abrasion in the cases of examples 1f and 1h.

An important increase in compound Mooney viscosity is observed upon addition of HXNBRtoHNBR. This is due to the fact that the raw polymer Mooneys at 100°C of the elastomers are 63 and 77 MU respectively. The additional labile crosslinking provided in the unvulcanized state of the HXNBRalso contributes tothe Mooney rise in the blend. Nanoclay addition to HNBRprovides a noticeable amount of additional reinforcement, with Cloisite 20A having the biggest effect (example 1g) followed by Cloisite 6A (1f) and finally Cloisite Na+ (1c). Examples 1d, 1f and 1h show the cumulative effects on compound Mooney viscosity of the nanoclays with the HXNBRandHNBR.

TheHXNBR, nanoclay and HXNBR/nanoclay effects seen in the compound Mooney are also observed in the injection moulding psi data collected by the MPT. However, in addition, it is seen that HXNBRdecreases the amount of die swell nominally by about 4%. Nanoclay addition has a small effect in decreasing the die swell (examples 1c, 1e and 1g) compared to the control compound 1a. The HNBR/HXNBR/nanoclay together (examples 1d, 1f, 1h) does not provide any added advantage compared to having HNBR/HXNBRalone (1b). The decreased die swell due to the HXNBRand to the nanoclays can be correlated with the increased reinforcement seen in the unvulcanized compound. The same effects in injection moulding, represented by MPT data, are also seen operating in the Haake extrusion rate and corresponding die swell data.

Concerning the MDR curing characteristics of the compounds, the addition of HXNBRcauses an important increase in the minimum torque values. This correlates with the increased compound Mooney viscosities values seen earlier. The curing behaviour represented by the cure times and cure rates are not affected by HXNBRor the nanoclay at the concentrations that were used.

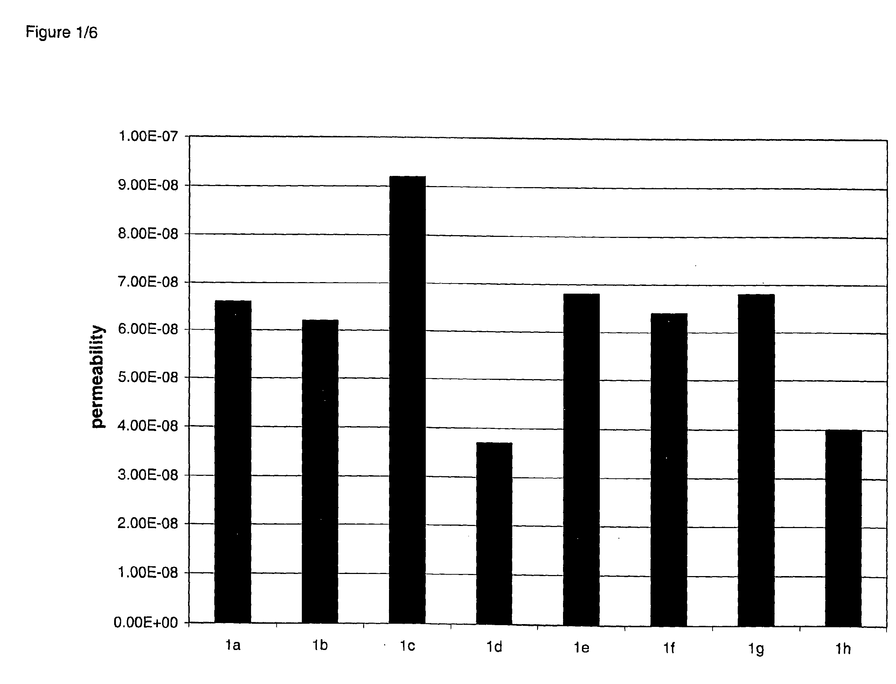

Figure 1 demonstrates the improved permeability resistance to air received from the HNBR/HXNBR/nanoclay blends as exemplified by examples 1d, 1f and 1h. HXNBRaddition to HNBRdoes not change the permeability characteristics (compare 1a to 1b). Addition of the nanoclay alone to HNBR (examples 1c, 1e and 1g) does not provide additional permeation resistance. However, the combination of all three components provides substantial improvement. The most effective nanoclay is Cloisite Na+ of example 1d in causing this improvement. Cloisite 20A in example 1h also shows very good permeability resistance improvement over the controls.

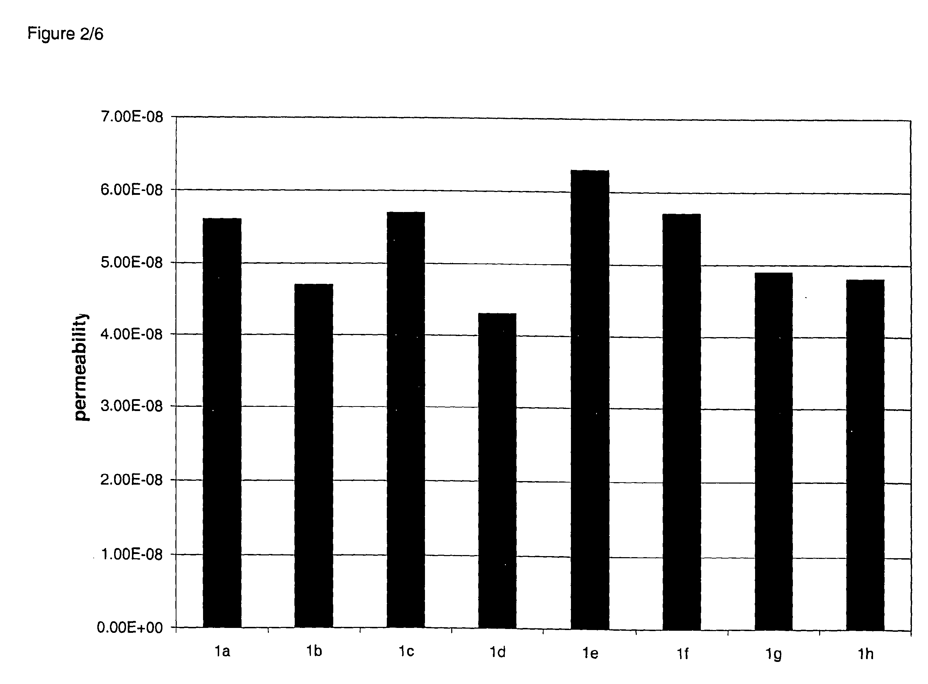

Figure 2 shows the improved permeability resistance to carbon dioxide of the HNBR/HXNBR/nanoclay blends, especially in the case of the Cloisite Na+ nanoclay (1d compared to 1c).

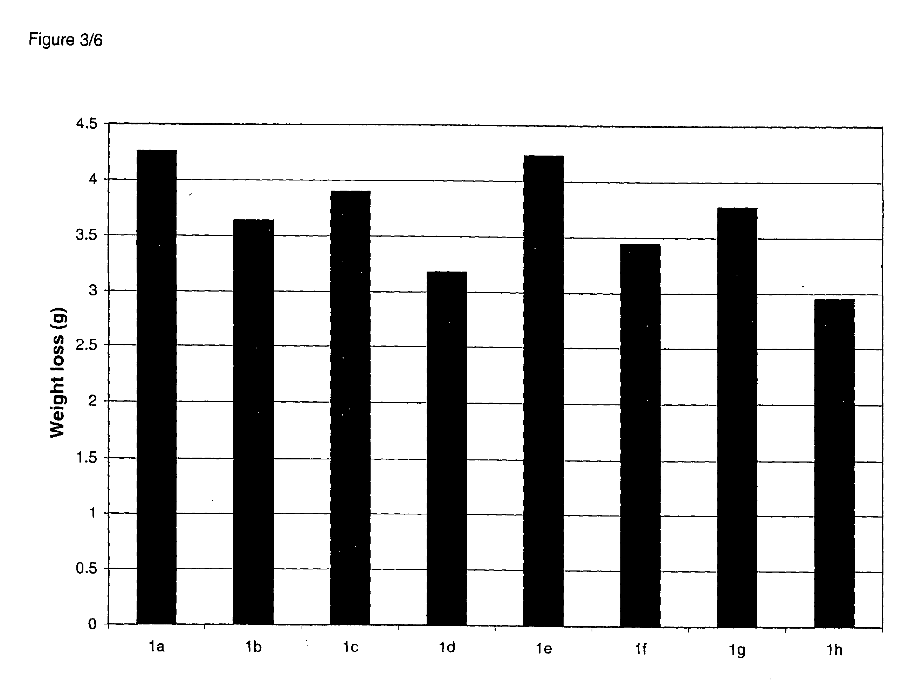

Figure 3 illustrates the cup permeation resistance to fuel C of the eight compounds and shows that again, the HNBR/HXNBR/nanoclay blend combination (examples 1d, 1f and 1h) is superior for permeation resistance. In the particular case of fuel C, Cloisites 20A and Na+ are the most effective in improving the permeation resistance.

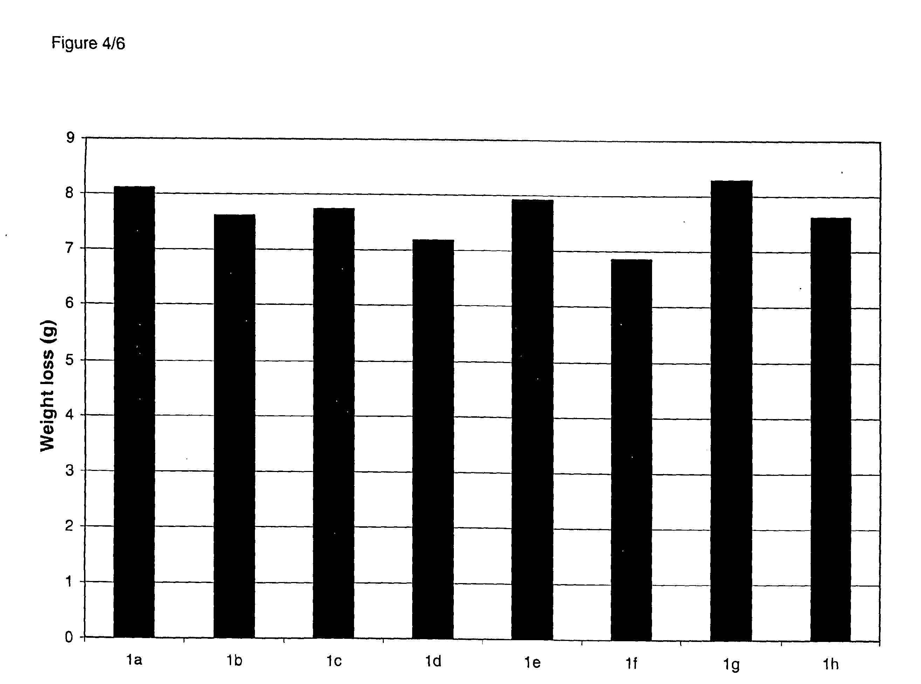

The permeation improvement provided by the HNBR/HXNBR/nanoclay blend is also seen upon changing the type of fuel in figure 4. On account of the ethanol addition in fuel CE10, the polymer matrix becomes more permeable however, permeation resistance can be improved by using the HNBR/HXNBR/nanoclay blend, in particular comprising Cloisite 6A (example 1g).

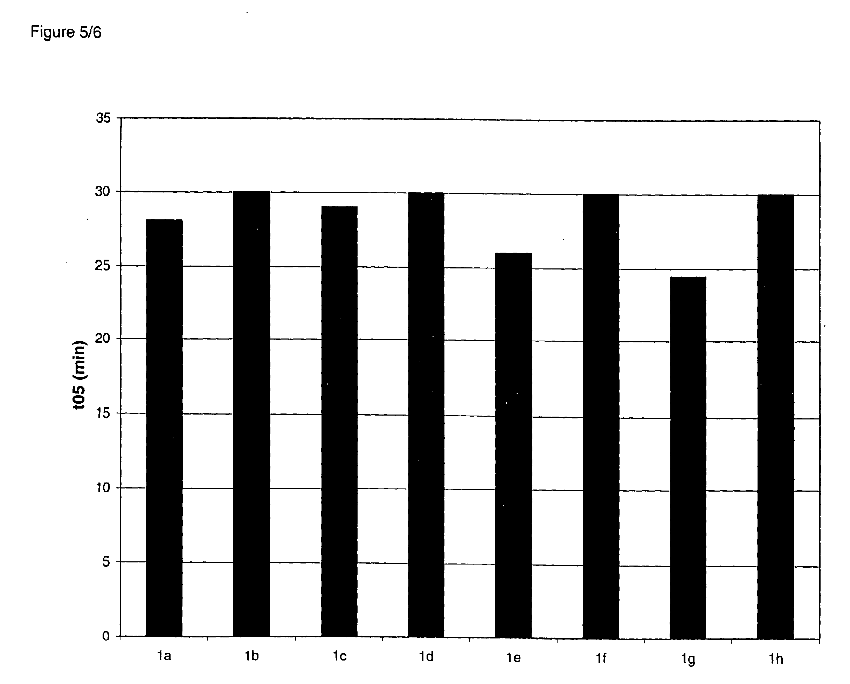

It is well known in carboxylated nitriles and in HXNBRthat scorchiness could be an issue. It can be seen in figure 5 that the HNBR/HXNBR/nanoclay blends do not display any scorch issues compared to the control 1a or to HNBR/nanoclay blends alone (1e and 1g).

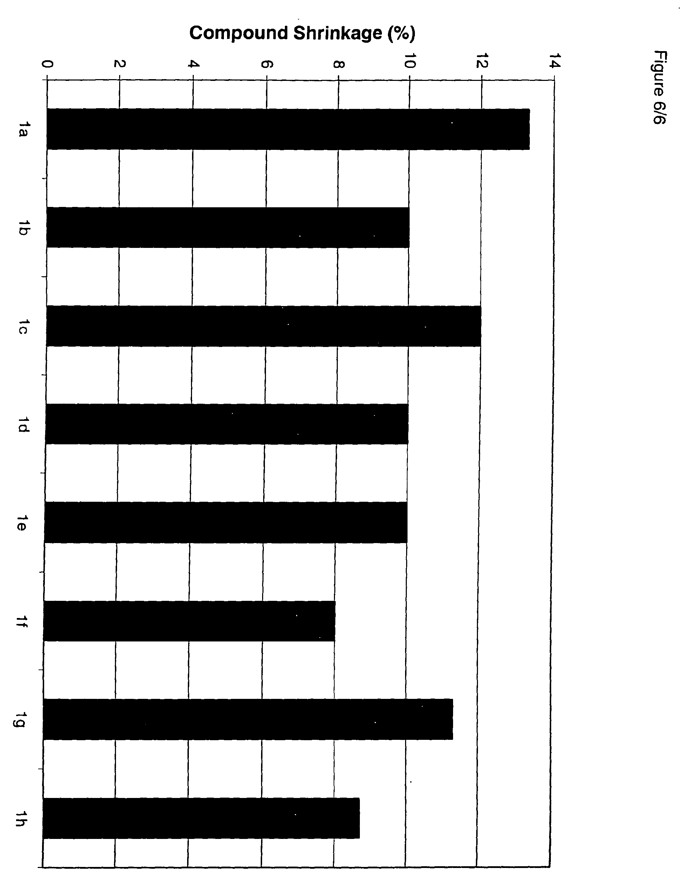

Compound mill shrinkage as shown in figure 6, is also improved by using the HNBR/HXNBR/nanoclay combination. In examples 1f and 1h using Cloisites 6A and 20A, ones sees a substantial improvement of the mill shrinkage.

## Claims

1. A rubber compound comprising at least one hydrogenated carboxylated nitrile rubber, at least one hydrogenated nitrile rubber and at least one nanoclay.

2. A rubber compound according to claim 1 wherein the hydrogenated carboxylated nitrile rubber is a statistical co-polymer.

3. A rubber compound according to claim 1 or 2, wherein the nanoclay is a smectite clay.

4. A vulcanizable rubber compound comprising a rubber compound according to any of claims 1-3 and further at least one vulcanization agent.

5. A vulcanizable rubber according to claim 4 further comprising at least one filler.

6. A process for the manufacture of a vulcanizable rubber compound according to claim 4 or 5 wherein at least one rubber compound comprising at least one hydrogenated carboxylated nitrile rubber, at least one hydrogenated nitrile rubber and at least one nanoclay, a vulcanizing agent and optionally one or more fillers and/or further auxiliary products are mixed together.

7. A shaped article comprising a compound according to any of claims 1-3.

8. A shaped article according to claim 7 in the form of a seal, gasket, belt, hose, bearing pad, stator, well head seal, valve plate, cable sheathing, wheel roller, in place gasket or pipe seal.
